# EUROPEAN PATENT APPLICATION

(11) **EP 4 733 694 A2**
(43) Date of publication of application: **29.04.2026**
(21) Application number: 25211481.4
(22) Date of filing: 30.04.2024
(51) Int. Cl.: F25D 23/00

(54) **TRANSPORT REFRIGERATION UNIT**

(30) Priority: 10.05.2023 GB 202306866
(62) Divisional of application: 24723774.6
(71) Applicant: Sunswap Ltd., Leatherhead KT22 7BA (GB)
(72) Inventor: PAYNE, Adam, Leatherhead, KT22 7BA (GB); TAUBER, Nikolai, Leatherhead, KT22 7BA (GB)
(74) Representative: Beck Greener LLP

(57) **Abstract**

Transport refrigeration units of a type configured to cool or heat the interior of a mobile enclosure, such as in a trailer or lorry, are provided together with related methods. In one instance, the unit comprises a chassis, at least one air movement device (55); and a mounting assembly (200). The assembly comprises sliding pins (212) fixed to the air movement device and extended at the sides; and first and second rails mounted to or formed by the chassis. The rails have respective channels (203) for receiving the respective sliding pins, wherein when mounting the air movement device the channels receive the pins at a proximal end and guide the fan assembly in a first direction towards a received position in the chassis as the pins slide along the channels.

## Description

The present invention relates to a transport refrigeration unit of a type configured to cool or heat the interior of a mobile enclosure, such as in a trailer or lorry, and related methods.

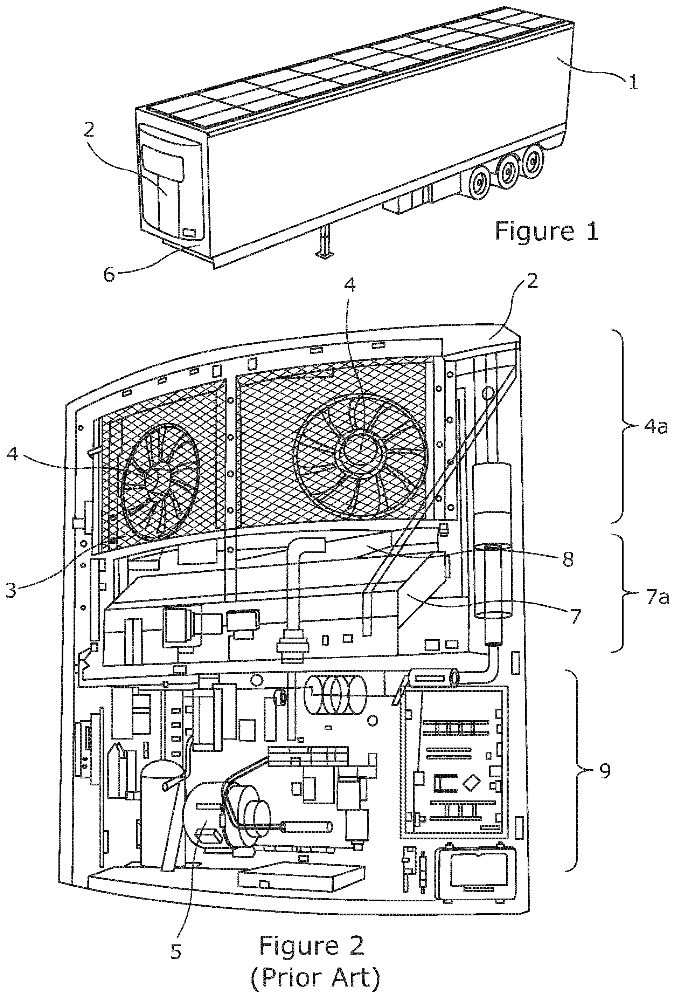

Transport Refrigeration Units (TRUs) play an important role for the food distribution industry in delivering fresh, frozen, and other perishable food from field to market. These are used with small rigid vans/trucks right through to articulated trucks pulling a refrigerated container. Often, a TRU may be used with a tractor unit pulling a semi-trailer (known as a semi-trailer truck in the US, an articulated lorry in the UK and various other names in other countries), where the TRU 2 is added to a specially designed and insulated trailer 1, for example as shown in Figure 1. The TRU comprises a refrigeration system that, when driven, blows chill air into one or more compartments in the interior of the trailer to cool the contents.

Traditionally TRUs are diesel driven, particularly when used with trailers. Such units are well established in the industry, but have a number of drawbacks including noise and exhaust emissions. To address the inefficiencies associated with regular diesel-driven TRUs, some hybrid designs and eTRUs have been proposed using solar power and/or batteries to supplement and/or supplant other power sources in powering the refrigeration unit. More recently, the present applicants have proposed in PCT/EP2021/062825, filed 14 May 2021, entitled "Electric Mobile Refrigeration Unit", the entire contents of which are hereby incorporated by reference in their entirety, a refrigeration unit powered by rechargeable batteries, optionally supplemented by solar, to minimise or eliminate the need for diesel power from the tractor unit or separate generator to power the refrigeration system.

Figure 2 shows a known example of a TRU 2, which includes a vapour compression refrigeration system comprising primarily the evaporator 7, compressor 3, condenser 4, and expansion valve (not shown), together with evaporator fans 8 for moving air over the evaporator 7 and condenser fans 4 for moving air over the condenser 3. When driven, the system blows chilled (or heated) air into the interior of the trailer 1 through an aperture in the end wall 6 to cool (or heat) the content.

A refrigeration system used in a TRU is subject to many additional constraints compared with refrigeration systems in other applications. For instance, the available space is tightly constrained. In many examples, the TRU occupies a relatively shallow volume on the front face of the trailer with a curved outer surface to conform with the arc swept out by the end of the trailer as it pivots around its kingpin attachment to the truck. Various standards exist governing the interface of the TRU to a trailer which place constraints on the positioning of elements of the TRU and the use the space. The size of the evaporator and condenser and their fans is also dictated by the amount of cooling required and hence it is difficult to reduce the space taken up by such systems without reducing the heat transfer capabilities of the system. Such systems also need to be robust, efficient (particularly where powered by batteries), maintainable, and weatherproof.

As shown in the example of Figure 2, the condenser typically occupies the top portion 4a of the TRU volume with the condenser fans 4 mounted behind the condenser 3, such that air is sucked in at the front of the TRU, through the condenser where it is heated, and expelled generally at the top and/or sides of the TRU. The evaporator generally occupies the middle portion 7a (vertically) of the TRU volume beneath the condenser, with evaporator fans 8 blowing air past the evaporator 7 into the interior of the trailer. The electrical and mechanical parts of the system generally occupy the lower portion 9 of the TRU volume. This arrangement is not particularly compact, which may be problematic, particularly but not exclusively in electrical systems where it may be desirable to use as much as possible of the volume inside the TRU for batteries to power the refrigeration system in order to increase capacity. Furthermore, the condenser fans mounted behind the condenser are not easily accessible for maintenance. Furthermore, the positioning of the fans close to the condenser surface and the mismatch between the circular fans and the rectangular condenser surface means "hotspots" of faster airflow are created at different parts of the condenser surface. This causes less inefficient heat transfer.

The present invention aims to address these and other problems in the prior art both in the field of transport refrigeration units and in other applications where refrigeration systems are used to cool an enclosure.

According to a first aspect of the present invention, there is provided a transport refrigeration unit (TRU) for mounting to a mobile enclosure comprising:
a refrigeration system including a compressor, evaporator and condenser;
at least one condenser air movement device; and
a plenum providing an air flow channel between the condenser and condenser air movement device, wherein the direction of air flow is at least partially reversed in the plenum.

The plenum may generally include a U-shape portion. This may have more than one branch, e.g. the airflow passing through the condenser may split into two U-shape channels with respective air movement devices, e.g. fans, (i.e. the plenum has generally W-shape where there are two fans). The change in direction may be, in embodiments, at least 120 degrees, or at least 150 degrees, or at least 170 degrees. Typically, but not necessarily, air enters the condenser in a first direction, normally backwards relative to the forward movement of the enclosure, e.g. truck and trailer to which the TRU is attached, and the air is sucked out of the plenum by the condenser air movement device in a direction that is at least partially forwards.

In embodiments, the reversal of the airflow has various advantages in that it gives more freedom in the positioning of the condenser fans and leads to more efficient configurations. Thus, compared with prior art schemes where the fans are behind the condenser, the invention allows the fans to be moved to other positions, e.g. to the sides of the condenser, and thus potentially occupy a more shallow space across the front of the TRU and thus potentially free the space at the rear for other components, e.g. the evaporator, which in turn may free up space for other components. The fans may also be made more easily accessible for maintenance. At the same time, the reversal in direction in airflow may prevent local "hot spots" of relatively high air flow velocity across the condenser face by allowing a more regular airflow path between the different parts of the condenser surface area and the fan.

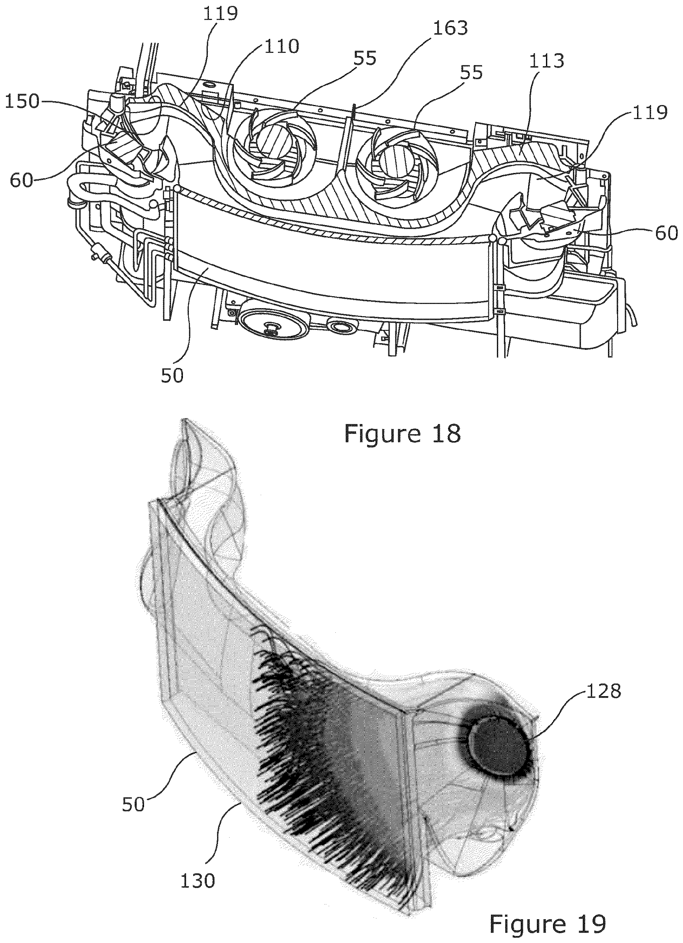

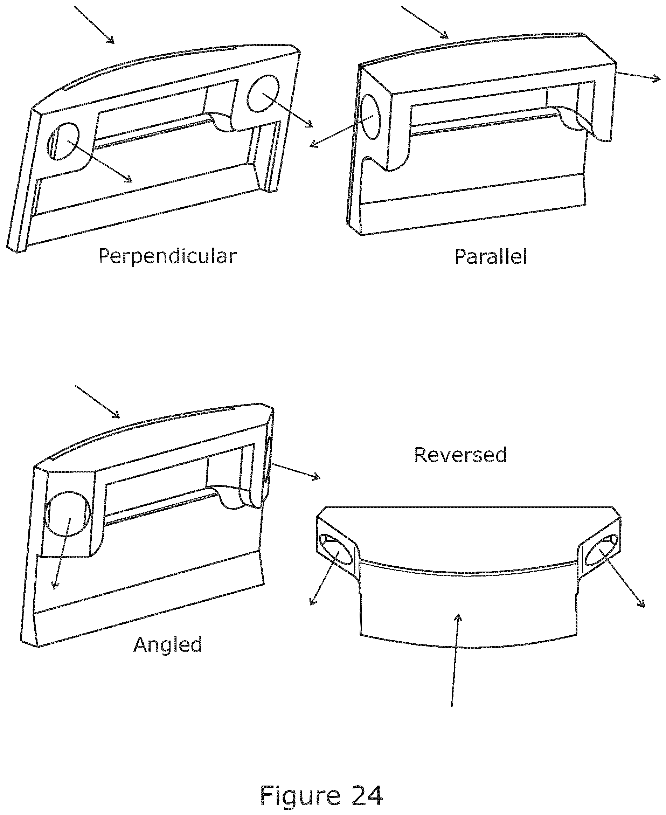

Figure 24 shows examples of airflow through possible plenum configurations where the fans are positioned at the side of the condenser (with arrows showing air entering through the condenser and existing via the fans). Examples 1 to 3 are comparative examples with the fans positioned at the side of the condenser in orientations where they are perpendicular, parallel and angled to the forward direction respectively. The fourth example shows an embodiment where the fans are reversed to create a change in direction of airflow in the plenum generally in accordance with aspects of the invention described herein. In the comparative examples, the velocity distribution of airflow across the face of the condenser is less uniform. In particular, the area of the condenser nearest the fans would tend to experience higher airflow velocity compared with other areas. While this may be workable, it may lead to inefficiency in cooling, which is an important consideration, particularly where the TRU is powered by batteries and maximising the cooling efficiency is particularly important. In contrast, the reversal of the fans and airflow in the plenum in the embodiment shown allows a more even airflow velocity profile to be developed across the surface area of the condenser. Furthermore, the surface of the plenum may be further specifically shaped to help achieve a highly uniform airflow. As described below, Figure 19 shows a highly uniform airflow velocity distribution in an embodiment of the present invention.

It has been found that there is no significant pressure drop through reversing the fans/direction of air in the plenum in the preferred embodiments compared with the other examples.

Due to the limited front-to-rear depth dimension of the TRU, the parallel and to a lesser extend the angled examples are constrained with the size of fan that is possible to fit into the space (it being understood that the air movement devices are typically relatively shallow in their axial direction, i.e. the axis about which the impeller/fan blades rotate, and have a relatively large width and height which may be difficult to accommodate in the limited depth dimension). Thus, these may suffer from relatively low outlet flow rates. The reversed fan embodiment may have the fans orientated such that their axial (i.e. shallow) dimension is aligned with the limited depth dimension of the TRU, allowing larger fans and maintaining higher airflow rates.

It can also be seen from Figure 24 that accessibility is improved with the reversed fan configuration, compared with the other examples, and particularly the perpendicular and angled examples where the fans are at the back of the TRU, thus leading to easier assembly/servicing.

The TRU may for example have a maximum depth, i.e. relative to the surface on which it is mounted, that is no more than 25% the height and/or width of the TRU. Typically the evaporator may extend 75% at least across the width of the TRU and the condense may extend at least 50% of the width of the TRU.

In an embodiment, the condenser and at least one condenser air movement device are both positioned at a front surface of the TRU.

In an embodiment, air enters the plenum through the condenser in a first direction and the air movement device is positioned at the other end of the plenum and orientated to pull air out of the plenum in a second direction which is at least partially opposite to the first direction.

The fans may be mounted such that they are facing forward. Thus, with the condenser mounted on the front face of the TRU, i.e. as is conventional per se, the air may enter the condenser in a backward direction, i.e. in the opposite direction to the direction of travel of the TRU when mounted conventionally to the front face of a trailer or truck or container, and the fans are at least partially facing forwards at the sides of the TRU to the sides of the condenser. As will be appreciated, the fan is generally circular with a depth that is less than its circumference. If the fan was angled to the side, it would take up more depth. By positioning the fan directed backwards, it can be made to be mainly in the same plane as the condenser, leaving move available space behind the fan. Nonetheless, some angling of the fans may be provided, e.g. between 0 and 30 degrees. This may also help conform to the volume of the TRU, which often has a curved front surface, with more angled sides, due to the space available at the front of the trailer. Thus, in embodiments, the plenum may be arranged to change the direction of the air between entering and exiting the plenum by between 135 and 180 degrees, and in some embodiments between 150 degrees and 170 degrees.

In an embodiment, the unit comprising a shroud having a first surface that at least partially forms the plenum.

In an embodiment, the evaporator is at least partially behind the condenser and separated from the condenser by the shroud. By moving the evaporator up to be level with the condenser and using a shroud to separate the evaporator and condenser and form respective plenums for the respective airflows, more efficient use is made of the available volume of the TRU such that additional space, e.g. below the condenser/evaporator system can be used for other items, such as battery capacity. The shroud has at least a portion where a front surface contributes to a plenum for the condenser airflow and the corresponding rear surface contributes to a plenum for the evaporator airflow. The surfaces may be separated, e.g. by thermal insulation material. In contrast, in prior art schemes, the evaporator is typically entirely or mainly below the condenser in a separate (vertically) part of the TRU volume, and thus more height in the TRU volume is taken up by these components, leaving less space for other components. Preferably when viewed from the front, i.e. normal to the face of the enclosure and in the direction the enclosure is moving when the TRU is mounted to it, the evaporator overlaps with the condenser in the vertical dimension by at least 75% or more. "behind" in this context means when looking at the TRU mounted to a wall of the enclosure end on. Thus, the evaporator will be between the condenser and the end wall of the enclosure. It will be appreciated that the evaporator may be wider than the condenser and so portions of the evaporator will not be directly behind any portion of the condenser, but when viewed from the side, they will be behind the condenser. Similarly, portions of the evaporator may extend above or below the condenser, whilst still being behind the condenser when viewed from the side. It is preferred however that at least 50%, or more preferably at least 75%, or even more preferably 100%, of the evaporator is behind the condenser, as this gives rise to an efficient user of space in the TRU volume and frees up space below the airflow/heat exchange parts of the refrigeration system for other elements.

In an embodiment, the at least one condenser air movement device is positioned outboard of the condenser and the first surface of the shroud is arranged to direct airflow laterally between the condenser and condenser air movement device. By moving the condenser air movement device, e.g. fan or fans, outboard, rather than being directly behind the condenser, the depth required for the condenser and fans can be reduced, i.e. they can be placed at least partially in the same plane, meaning that space is made available behind the condenser for the evaporator. The plenum then runs from behind the condenser, which may be relatively shallow, laterally to where the fans are positioned to direct the air between them. The condenser fans are also made more accessible by way of this placement, e.g. the condenser does not have to be removed to service or replace the fans, and/or at least the condenser does not impede access to the fans or removal of the fans as much as if the fans were behind the condenser.

In an embodiment, the first surface includes a concave surface portion behind the condenser air movement device such that airflow following the surface undergoes the at least partially reverse in direction. This helps promote laminar flow as the air is caused to change direction in the plenum. This part of the plenum requires relatively more depth, but can be accommodated at the sides of the TRU outside the space occupied by the evaporator fans on the other side of the shroud where no significant space is required by the evaporator/cold side of the refrigeration system.

In an embodiment, air enters the condenser in a rearward direction relative to the normal direction of travel of the mobile enclosure and the condenser air movement device sucks air from the plenum in a direction that is at least partially forwards.

In an embodiment, the at least one condenser air movement device is accessible at the side of the TRU without having to remove the condenser.

In an embodiment, the unit comprising at least one air movement device positioned above the evaporator for moving air through the evaporator wherein a second surface of the shroud on the opposite side to the first surface at least partially provides a plenum for providing air flow laterally between the evaporator and evaporator air movement device, wherein the condenser air flow plenum is separate from the evaporator air flow plenum.

In an embodiment, the at least one evaporator air movement device is inboard of the condenser air movement device. The condenser fans and the plenum behind the condenser fans may take up most of the available depth in the TRU at the sides. This leaves space between the condenser fans above the evaporator which is available for the evaporator fans. Thus, efficient use of the available space in the TRU is made.

In an embodiment, the unit comprising insulation between first and second surfaces of the shroud. By placing a thermally insulating material of preferably at least 10mm or more preferably at least 50mm between the surfaces of the shroud, this helps avoid heat leaking from the hot channel to the cold channel.

In an embodiment, the overlying first and second surfaces of the shroud are differently curved in the region forming the condenser and evaporator plenums. The surfaces may be carefully designed to aid appropriate airflow in their respective plenums, e.g. to help achieve uniformity in airflow velocity at the condenser/evaporator faces and to avoid turbulent flow arising in the plenums. Thus, the thickness of insulation may vary across the surface due to the different surface shaping.

In an embodiment, a cowl is fixed to the first surface of the shroud such that at least part of the condenser plenum is formed between the cowl and first surface of the shroud.

In an embodiment, the condenser air movement device is mounted above a hole in the cowl.

In an embodiment, the cowl at least partially defines an aperture above which the condenser is mounted.

In an embodiment, the condenser air movement device is a centrifugal fan arranged to push out air in a radial direction, the unit comprising one or more members that mount around the fan having surfaces that form a scroll that is arranged to direct airflow pushed out of the fan in a particular direction where it exits through an aperture in the TRU.

In an embodiment, the fan is mounted to the one or more members.

Thus, a separate mount for the fans is may be omitted where the members forming the scroll around the fan are structural and can support the fans.

In an embodiment, the one or more members provides a drip tray to drain away rain water that enters the TRU.

In an embodiment, the shroud comprises one or more drip trays positioned below at least one of the condenser and evaporator.

In an embodiment, the evaporator drip tray has a heating element running along its length which when provided with electrical current by a control system prevents water in the drip tray from freezing, wherein the element is encapsulated in the drip tray by a sealant, such as an epoxy material.

This may avoid the need for more complicated cable management schemes.

According to a second aspect of the invention, there is provided, a transport refrigeration unit (TRU) for mounting to a mobile enclosure comprising:
a chassis;
at least one air movement device; and
a mounting assembly for the air movement device comprising:
   sliding pins fixed to the air movement device and extended at the sides;
   first and second rails mounted to or formed by the chassis,
   wherein the rails have respective channels for receiving the respective sliding pins, wherein when mounting the air movement device the channels receive the pins at a proximal end and guide the fan assembly in a first direction towards a received position in the chassis as the pins slide along the channels.

For instance, the fans may be fans for the evaporator that are accessible at the rear of the TRU. The direction in which the fans are received is thus by advancing the fan and plate assembly in a forwards direction. Generally, the fans are accessible at the rear, as an aperture is needed in the rear face of the TRU by which the fans push air into the trailer. Thus, the fans may be removed/inserted through this aperture without removing the TRU from the trailer, e.g. for maintenance or to replace a failed device. It is therefore not necessary to perform operations from more than one position in removing/inserting the fan, e.g. in prior art schemes whilst the fans may be inserted from the rear of the TRU, it is typically necessary to secure the fan in place by bolts from the top of the TRU, meaning that it is often required to have an operator inside the trailer positioning the fan unit and an operator outside the trailer above the TRU, e.g. on a ladder or gantry, to secure the bolts. The present invention provides a much simpler attachment method that avoids these issues. The pins can be any extending feature that can engage with the rails such that the fan is guided into position. The pins may for instance be formed in or extend from a plate to which the fan is mounted.

In an embodiment, the unit comprising: a plenum having an opening for communicating with the air movement device, wherein the distal ends of the channels extend in a second direction at least partially perpendicular to the first direction and towards the opening such that the movement of the pins in the distal end of the channels causes the air movement device to seat against the opening. Thus, the channel allows clearance for the fan as it is guided into the received position, whist at the end of its travel allowing motion towards the opening of the plenum draws air from to promote a better connection between fan and plenum. Often the opening will have a "lip" or similar feature that is intended to be inserted inside the fan, or otherwise mate with the fan to avoids gaps and avoid pressure loss, etc., between the fan and the opening.

In an embodiment, the unit comprising an adjustment screw for adjusting the depth of the pins in the distal end of the channels. This can help fine tune the seating of the fan and opening.

In an embodiment, the unit comprising one or more reversible fixtures for securing the air movement device in the received position. For instance, reversible fixtures, such as bolts, may be provided to attach the plate to the rails at each side. This, together with the engagement of the pins in the channels, may secure the fan in its final position. Again, these fixtures are preferably operable from the rear, i.e. close to where the fan and plate assembly is inserted into the TRU, such that a single operator from a single position can complete the operation of mounting/unmounting and removing the fan. The end of the plate may have a flange at each side through which the fasteners extend and thus which is clamped to the ends of the respective side rails to clamp the fan/plate assembly in position.

In another aspect of the invention, there is provided a method of transporting goods comprising controlling the temperature of the goods in the mobile enclosure with the TRU of any preceding claims whist transporting the goods to a destination.

Another aspect of the invention relates to a transport refrigeration unit wherein the evaporator is positioned at least partially behind the condenser when viewed from the front, wherein a shroud separates the condenser and evaporator and the front and rear surfaces of the shroud contribute to forming respective air flow plenums for the condenser and evaporator. This arrangement may lead to a compact form for the compressor/evaporator elements of the refrigeration system leaving more space for other elements in the TRU, such as batteries to power the system. In embodiments, this is enabled by moving the condenser fan or fans from their typical position behind the condenser to position(s) at the side(s) of the condenser. The fans may be reversed compared with the typical positioning such that they pull air of the plenum between the fan and condenser in a direction at least partially opposite to the direction in which air enters the plenum through the condenser and/or the airflow plenum may be curved to help the airflow change direction.

Another aspect of the invention relates to a transport refrigeration unit comprising a drip tray mounted under the evaporator to catch condensation, the drip tray being provided with a heating element encased or formed therein to prevent freezing.

It will be appreciated that any features expressed herein as being provided "in one example" or "in an embodiment" or as being "preferable" may be provided in combination with any one or more other such features together with any one or more of the aspects of the present invention.

Embodiments of the present invention will now be described by way of example with reference to the accompanying drawings, in which:
Figure 1 shows a perspective view of an example of a TRU mounted to a trailer;
Figure 2 shows a front view of a conventional TRU with the outer covers removed;
Figure 3 shows a schematic view of an example of a refrigeration system;
Figure 4 shows a front view of an example of a TRU in accordance with an embodiment of the present invention;
Figures 5 and 6 shows perspective views from the front and rear of a shroud for use with the TRU of Figure 4;
Figures 7 and 8 shows perspective views from the front and rear of the shroud mounted to the TRU;
Figure 9 shows the TRU in vertical front-to-rear cross section;
Figure 10 shows a perspective view from the front of the TRU;
Figures 11 to 14 show air flow and air velocity visualisations for the condenser and evaporator;
Figure 15 shows the shrouds being offered up to the TRU framework;
Figures 16 to 18 show cross sections of the TRU;
Figure 19 shows the condenser plenum;
Figure 20 shows the front of the shroud with the cowl removed to show the curvature of the shroud surface forming the condenser plenum;
Figure 21 shows a detail from the rear of the TRU of the evaporator fan mount, and Figures 22 and 23 show cross sections through the fan mount;
Figure 24 shows the airflow through the plenum of the TRU together with 3 comparative examples.

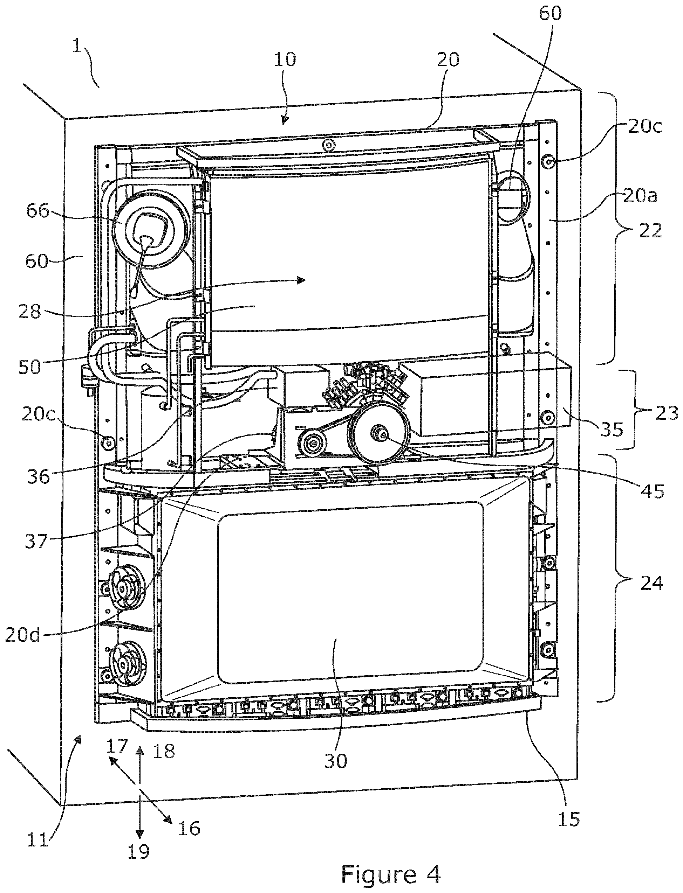

Figure 4 shows a perspective view of an example of a transport refrigeration unit (TRU) 10, attached to the front of a semi-trailer 1 of the sort shown in Figure 1 that can be attached to and pulled by a tractor unit (not shown) for transporting goods loaded to the interior of the trailer via doors at the rear of the trailer. Generally in the following description references to the "front" are in the direction of arrow 16, i.e. the forwards direction of the trailer; the "rear", arrow 17; the "top", arrow 18; the "bottom", arrow 19 and the "sides", numerals 15.

It will be appreciated that the TRU may equally be attached to other vehicles types, such as rigid body trucks, vans and lorries, or containers such as shipping containers that can be lifted onto a trailer for transportation and may be generally applicable to cooling the interior of any enclosure. Although the unit has been described as cooling the interior of the trailer, it may also be arranged to heat the interior of the trailer.

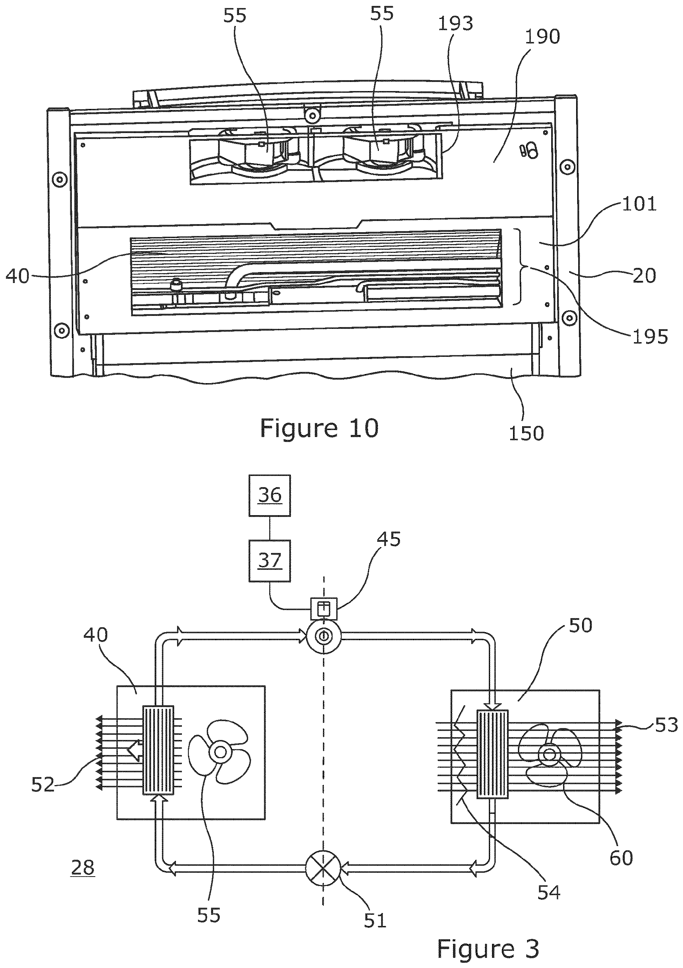

The TRU is shown without the external cover that would normally be installed to weatherproof the TRU in order to show the components more clearly. The TRU 10 comprises a structural framework 20 which supports the various elements of the unit and which provides attachment points 20c for fixing it to the trailer, which are generally provided at the sides, e.g. in vertical side members 20a. The framework 20 generally defines an upper volume 22 and a lower volume 24. The upper volume 22 houses a vapour compression refrigeration system 28, such as shown in Figure 3, comprising primarily the evaporator 40, compressor 45, condenser 50, and expansion valve 51, together with fans 55 for moving air over the evaporator and fans 60 for moving air over the condenser.

When the compressor 32 is driven, here via an electric motor 37 and motor controller 36, the refrigerant is compressed, raising its temperature and pressure. The refrigerant enters the condenser 34, which acts as a heat exchanger transferring heat from the refrigerant to a flow of fluid - here ambient air 53 driven across the heat exchanger surface area by fans 60, and so lost to the environment.

When the refrigerant enters the expansion valve 51, it expands, releasing pressure, and its temperature drops. The expansion valve serves to maintain a pressure differential between low- and high-pressure sides, as well as controlling the amount of liquid refrigerant entering the evaporator 30. At the stage of entering the evaporator 40, the refrigerant is at a lower temperature than its surroundings. It evaporates and absorbs latent heat of vaporization from the air inside the trailer 12 which is circulated by fans 55 to cool the contents. Heat extraction from the air to the refrigerant happens at low pressure and temperature. Compressor 45 suction effect helps maintain the low pressure.

It will be appreciated that this is a simplified depiction of the refrigeration system. A practical system may have further elements, valves, vessels, sensors, etc. which are not necessarily shown in the following drawings for clarity.

Heating elements 54 may be provided together with the evaporator such that when supplied with power and with the refrigeration system turned off, the air 53 heated by the heating elements is blown into the trailer by the evaporator fans 60 to defrost or heat the contents of the trailer.

The TRU volume is generally divided into a first compartment housing the refrigeration system 28 and a second compartment below the first compartment housing one or more rechargeable battery packs 30 for powering the refrigeration system, optionally in combination with solar power. Within the first compartment, the compressor and evaporator occupy an upper portion 22 with the evaporator located behind the condenser. In the lower portion 23 of the first compartment, the compressor 45 is mounted to a shelf 20d of the framework 20. Power distribution and/or system control electronics 35 and a motor and motor controller 36,37 for driving the compressor 45 are also located in this portion of the first compartment, as well as potentially smaller elements of the refrigeration system, such as the expansion valve, other valves, heat exchangers, etc. and of course the necessary connecting pipework. In other examples, the refrigeration system may be powered by different power sources or combination of sources, including by a dedicated internal combustion engine or by the tractor engine.

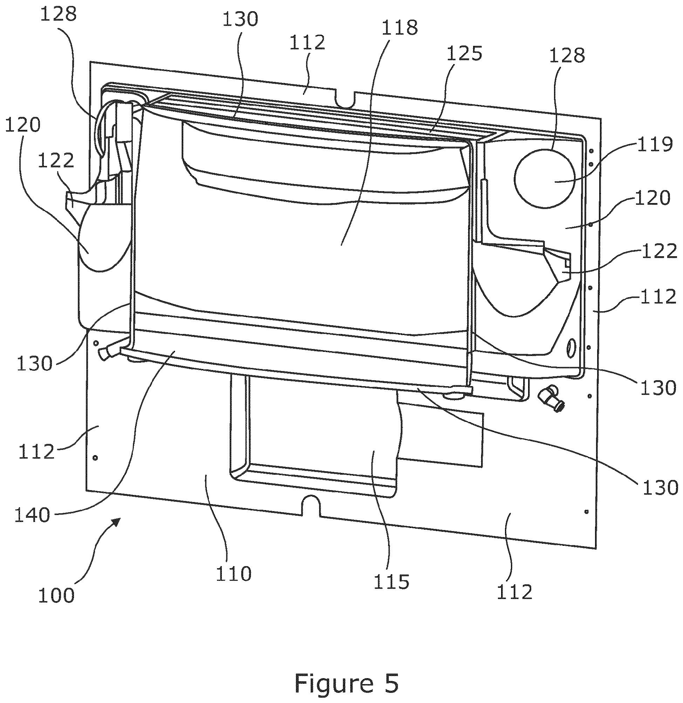

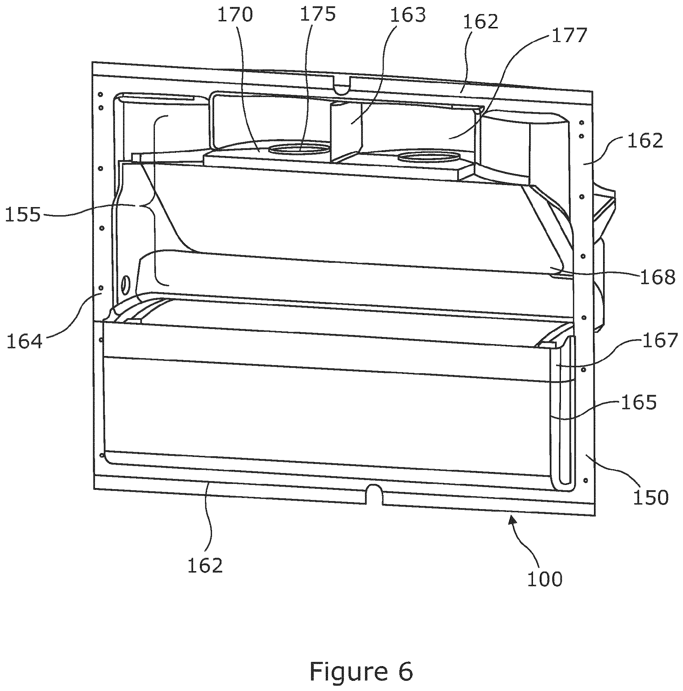

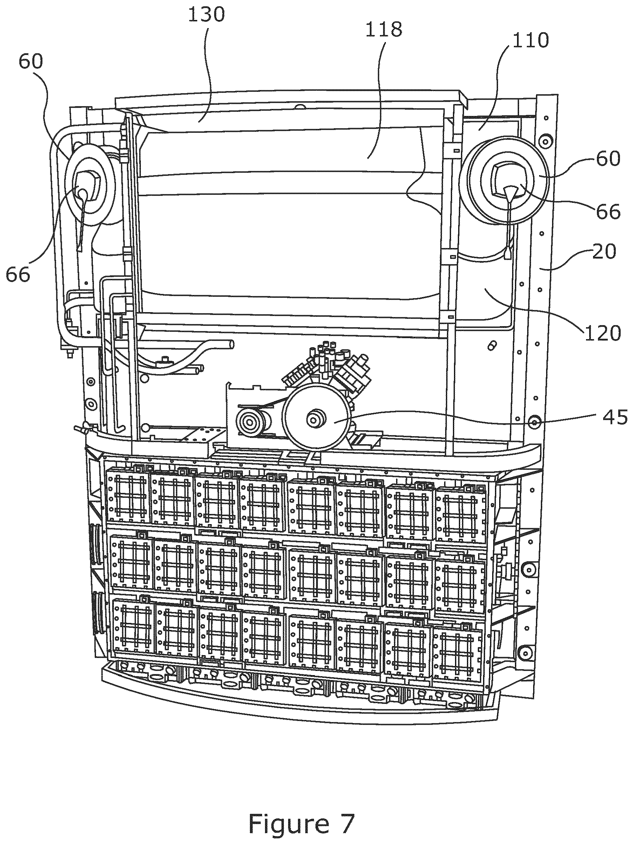

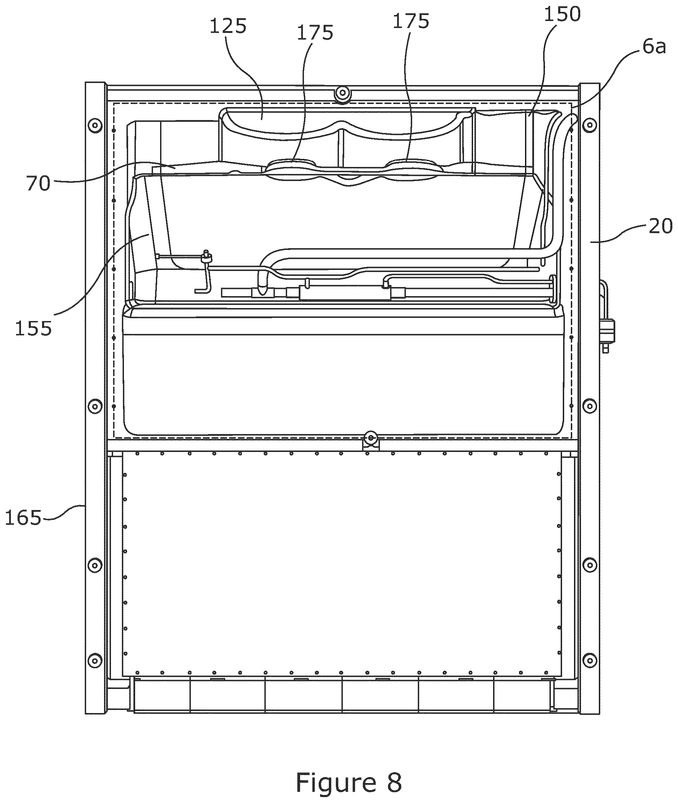

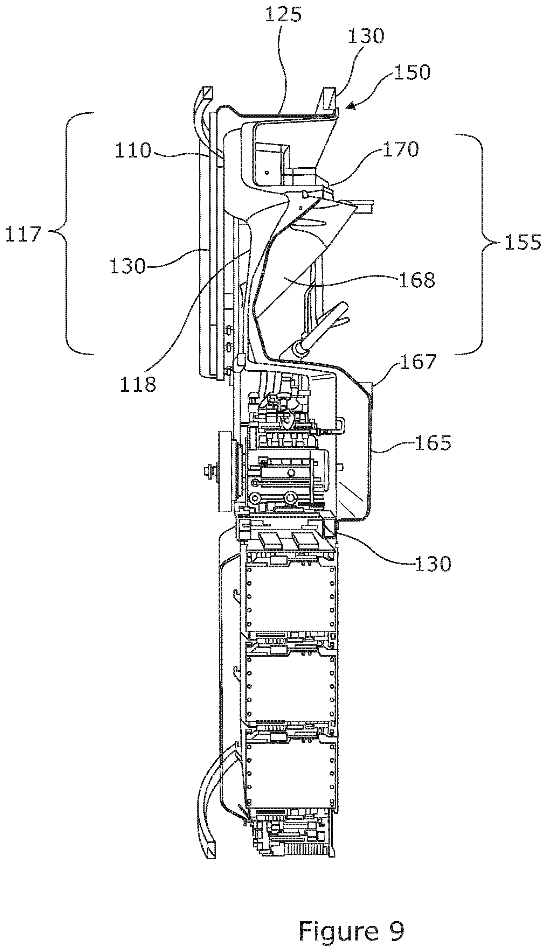

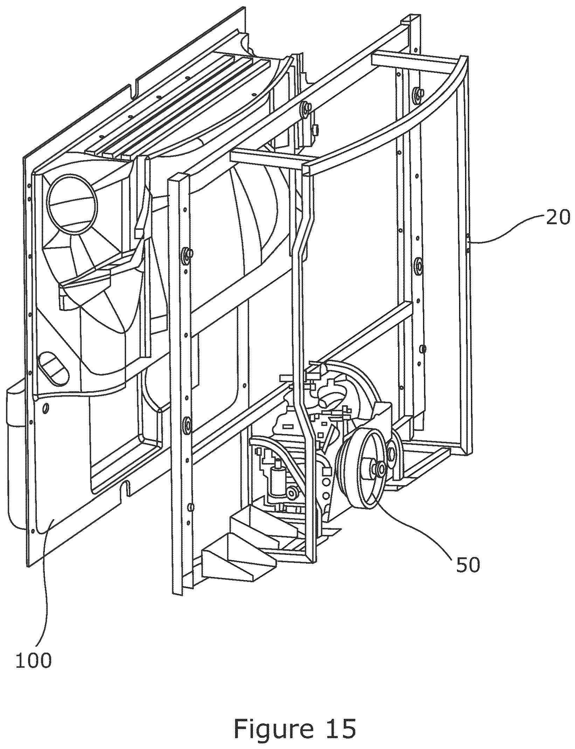

As will be described in more detail below, the first compartment includes a shroud 100 the surfaces of which contribute (in combination with other elements as will be described below) to forming respective plenums, i.e. air flow channels, for directing the airflow for the condenser and the evaporator created by their respective fans. Figures 5 and 6 show the shroud from the front and rear respectively. Figures 7 to 9 show the shroud installed in the TRU, with Figure 7 showing the TRU from the front (with the condenser removed for clarity), Figure 8 showing the TRU from the rear (with the evaporator removed for clarity) and Figure 9 showing a vertical cross section front-to-rear through the centre of the TRU. Figure 15 shows the shroud assembly being offered up to the TRU framework 20 before being fixed in place.

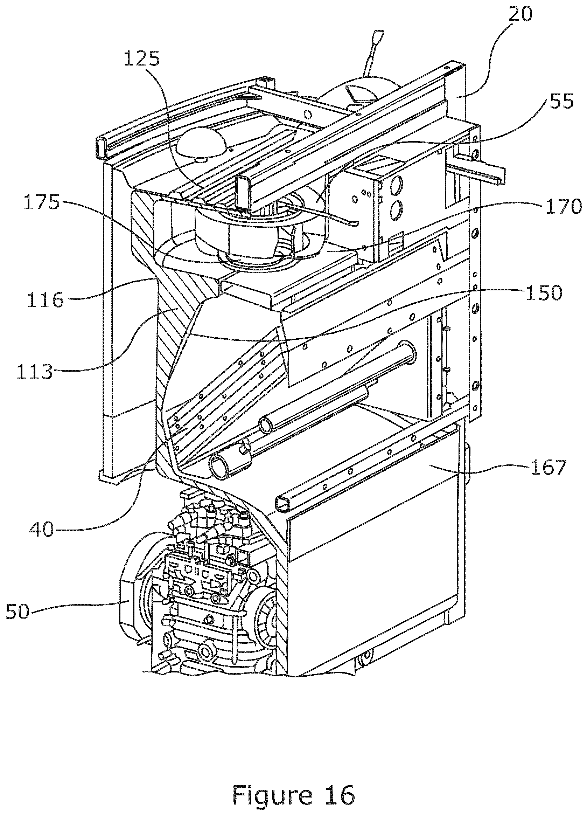

The shroud has a front surface 110 and rear surface 150, both of which may be formed from plastic sheet material joined back to back around their peripheries 112 with at least a portion of the front surface being shaped to form a "hot channel" at the front of the shroud for the condenser airflow and a portion of the rear surface being shaped to form a "cold channel" at the rear of the shroud for the evaporator airflow. Insulation 113 (see Figure 16) is disposed between the two sheets to insulate the hot and cold channels. The depth of the shroud and hence thickness of the insulation may differ across the width of the shroud to accommodate the surface shaping required to form the respective air flow channels at the front and rear, but generally the thickness is between 2 cm and 20 cm throughout the shaped portion of the shroud forming the airflow channels. The shroud is mounted to the framework of the TRU via fasteners around its periphery, which is generally rectangular and planar, as shown by Figure 15.

On the front surface 110, the upper portion of the shroud corresponding to the upper portion 22 of the first compartment curves in a generally forward direction (i.e. away from the trailer wall in the direction of travel) forming an airflow surface 118 for the condenser as well as creating space at the rear of the shroud to accommodate the evaporator and evaporator fans (as described below). A shaped cowl 120 is attached to the front surface 118 of the shroud forming a plenum with the curved surface behind it. The cowl 120 has a hole 119 at each side for communicating with a respective air movement device, e.g. fan 60, and which serve as outlets of the plenum. The fans are mounted above the hole via brackets 66 (see Figure 7). The holes 119 are generally forward facing and the fans are configured to suck air from the plenum in a corresponding generally forward direction. The cowl also defines a rectangular aperture 130 (see Figure 7) positioned between the fan holes to which the condenser 28 is mounted in use (see Figure 4) and serves as the inlet to the plenum. Thus, when the fans are driven, air is pulled into the plenum through the condenser in a rearward direction, undergoes a change in direction due to the generally U-shape of the plenum as it is sucked out of the plenum in a forward direction by the fan.

The fans are centrifugal fans, arranged to suck or pull air inside the blower from the plenum in an axial direction and then push it out at a radial angle. A scroll 122 is positioned at least partially surrounding each fan hole to direct the hot air pushed out by the fan to a generally upwards direction, where it exits the TRU via an aperture in the TRU cover (not specifically shown) which in use surrounds the fan. This may also acts as a drip tray catching and draining away rainwater to the sides of the TRU. In other examples, the scroll 122 and bracket 66 can be combined in a single element, e.g. a rigid thermoplastic element which mounts to the framework, is strong enough for the fan to mount to and surrounds the fan, providing the scroll feature arranged to direct the air pulled out of the plenum upwards where it exits the TRU.

At the bottom of the condenser, a tray 140 is attached across the shroud which may seal with the bottom edge of the condenser and functions as a drip tray to catch and drain away condensation formed by the condenser. The tray may cooperate with the cowl and the front surface of the shroud in forming the plenum. It will be appreciated that more or fewer members may be used in other embodiments in forming the plenum.

The lower portion of the front surface 110 has a recessed portion located in the lower portion 23 of the first compartment to create additional space at the front of the shroud to accommodate the compressor.

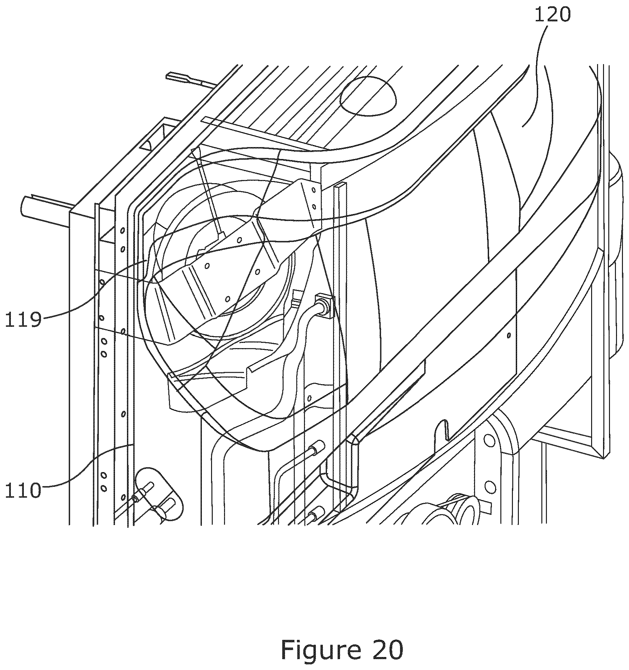

Figure 20 shows the front surface with the cowl removed showing the airflow surface 118 in more detail. As can be seen, a concave "bowl-like" surface 119 is provided behind each fan. These surfaces are generally above the evaporator and outboard the evaporator fans and thus there is more depth available at the front of the shroud, as it is not required to bulge forward to the same degree to accommodate the evaporator and evaporator fans at the rear of the shroud. The bowl shape aids the change in direction of the airflow in the plenum from entering through the condenser in a generally rearward direction to exiting via the fans in a generally forward direction. The fans may be angled slightly outwards, e.g. between 10 and 30 degrees to the plane of the shroud (e.g. defined by its periphery and its attachment to the framework and the front face of the trailer to which it mounts) to conform with the generally curved surface of the TRU. In embodiments, the fans may also be at a slight angle in an upwards direction, e.g. between 5 and 30 degrees to the plane of the shroud. Thus, in embodiments, the plenum may be arranged to change the direction of the air between entering and exiting the plenum by between 135 and 180 degrees, and in some embodiments between 150 degrees and 170 degrees.

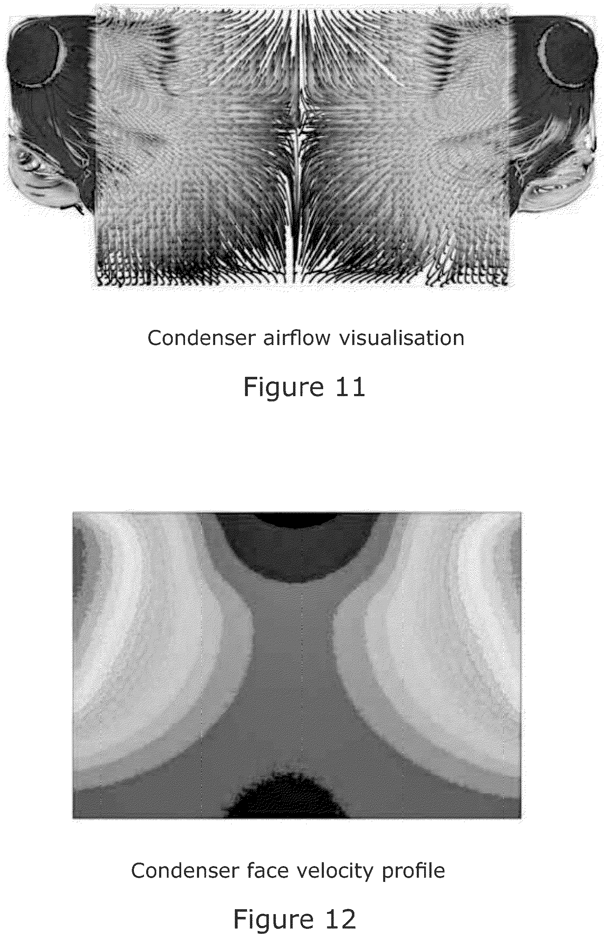

Figure 19 shows the shape of the condenser plenum and airflow in more detail. The shape of the plenum provided by the curved shroud surface and the inner surface of the cowl is arranged to cause airflow so that the air velocity is substantially uniform across the condenser face, e.g. a variation of no more than 20% and preferably no more than 10%, as shown by Figures 11 and 12. Generally the plenum is relatively shallow in the region behind the condenser, consistent with the need to provide space for the evaporator on the rear of the shroud Then, the cross section area of the condenser plenum perpendicular to the air flow path lines (figure 19) gradually and continuously decrease in size as the air particles approach the inlet to the air movement device so as to ensure a laminar flow profile and reduce pressure drops caused by turbulence. The shroud effectively creates an organic and reversing funnel effect for the air.

Turning to Figure 6, the rear surface 150 of the shroud contributes to forming a plenum for the evaporator air movement devices, e.g. fans, to pull air from the trailer, through the evaporator, and then blow the chilled air back into the trailer. An upper portion of the shroud 150 is recessed 155 between the edges 162 of the shroud, i.e. extends in a forward direction when mounted to the TRU, creating a space in which the evaporator and evaporator fans are positioned. The recessed portion 155 of the rear shroud is accommodated within and at least approximately conforms with the forward curved surface portion 118 of the front shroud.

A horizontal shelf 170 divides this recess 155 into two spaces. Two evaporator fans are mounted via brackets in the space above the shelf, as described in more detail below. A baffle 163 may separate the two fans in this space. The evaporator is mounted to the TRU framework in the space below the shelf 170. The fans are centrifugal fans, i.e. arranged to suck air into the fan in an axial direction, here upwards, and push it out in a radial direction. The fans mount over holes in the shelf forming fan inlets 175, such that air is sucked into the fan from the space below, which is open to the interior of the trailer (or whatever enclosure the TRU is mounted to) through an aperture in the trailer wall. Thus, air is sucked from the lower part of the trailer, passes through the cooling coils (and heating rods) of the evaporator and is chilled (or heated), and into the fan.

The surface of the shroud forming the space above the fans and the baffle cooperate to form a scroll around the fans so as to direct the air flow pushed out by the fan in a rearward direction such that the chilled air is pushed into the interior of the trailer (or whatever enclosure the TRU is mounted to) through an aperture in the trailer wall. Thus, the fans operate to circulate air in the trailer, whereby the fans push chilled (or heated) air into the top of the trailer, which circulates within the trailer and is then pulled back through the evaporator.

A relief portion 165 towards the bottom of the rear surface of the shroud 150 accommodates the recessed portion 115 in the front of the shroud which in turn helps accommodates the compressor. A lip 167 is provided across the top of the relief portion 165 to act as a drip tray for the evaporator and drain away condensation. In particular, when the evaporator is in defrost mode, liquid can form which is drained away by the drip tray. The drip tray may have a heat trace, i.e. a cable that is caused to get hot in operation by passing a current through it, running along its length, e.g. at the bottom of the tray, which prevents the liquid from freezing in the drip tray where the trailer temperatures are sub-zero. The heat trace may be encapsulated in the tray by epoxy resin or a similar sealing substance as a simple and convenient method of cable management.

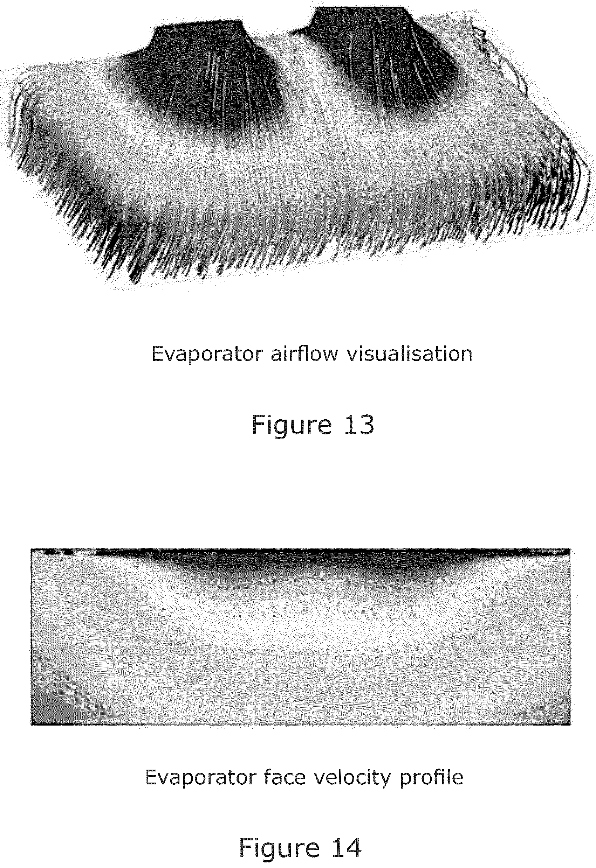

Figure 8 shows the shroud mounted to the TRU framework 20 from the rear. As shown by Figure 10, with fans 55 and evaporator framework 40,101 mounted to the TRU, a cover 190 is added which cooperates with the rear surface of the shroud to complete the plenum between fans and evaporator. Apertures 193 in the cover allow chilled air to be pushed by the fans into the trailer. Apertures are also provided over the evaporator coils to allow the air to be pulled from the trailer. The aperture in the end wall of the trailer (shown by dashed line 6a in Figure 8) is generally rectangular and overlies the lower and upper portions 22,23 of the first compartment such that at least the apertures 193 and 195 as well as the relief portion 165 and the drip tray 167 are within the aperture, and the relief portion and drip tray extends slightly backwards into the trailer. Figure 11 shows airflow and Figure 12 shows air velocity at the condenser face, which is made substantially uniform due to the arrangement of the plenum. Likewise, Figure 13 shows airflow and Figure 14 shows air velocity at the evaporator face, which is also made substantially uniform by the arrangement of evaporator fans and the plenum surface.

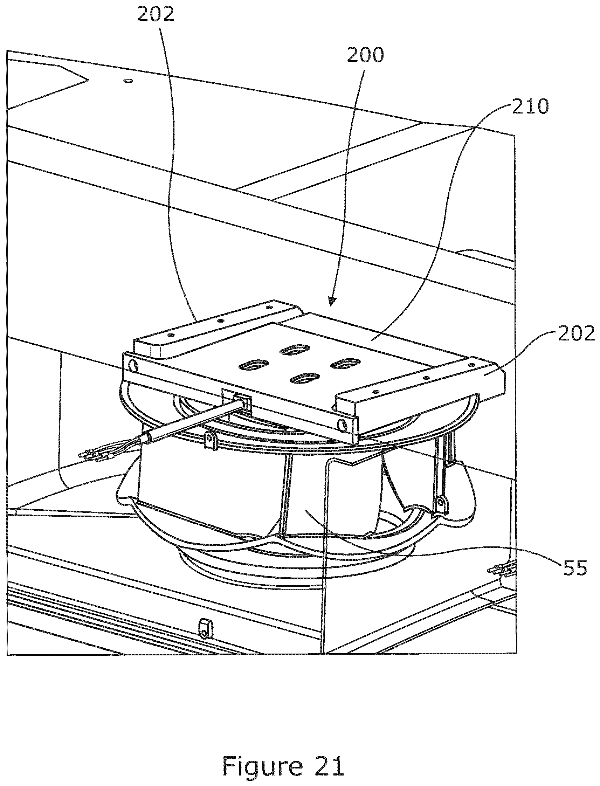

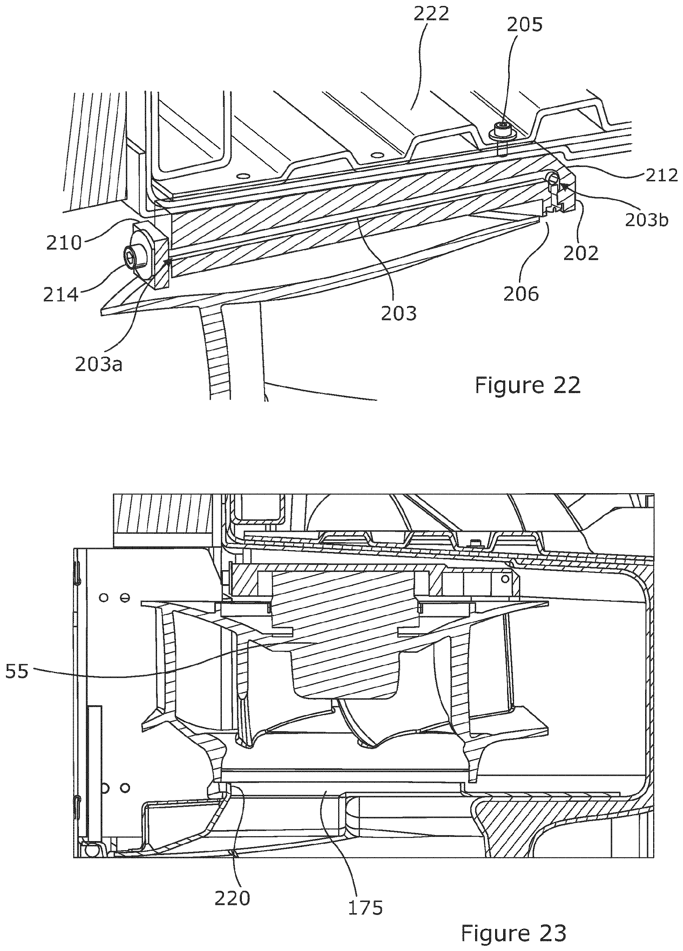

Figure 21 shows a detail from the rear of the TRU showing how the evaporator fans are mounted to the TRU, with Figures 22 and 23 showing cross sections through the fan mount mechanism 200. For each fan, side rails 202 are attached to a ceiling 222 of the TRU via bolts 205 or other fastener. The ceiling 222 is a corrugated structural plate element attached to the framework. The fan 55 is attached to the underside of a mounting plate 210. At the end of the plate 210, a sliding pin 212 extends laterally from each side (shown in Figure 22) which engage in generally forward-rearward extending channels 203 formed in each of the side rails 202. These channels are open 203a at the rear of the TRU to receive the pins and allow the plate to be inserted in a forward direction with the pins sliding forwards in their respective channels and thus guiding the end of the plate/fan assembly into the space in which it is received. The channels are positioned with sufficient height that the bottom of the fan has clearance over the inlet ring 220 surrounding the fan inlet 175 as it is slid forwards into position. The distal ends 203b of the channels drop downwards towards the inlet ring 220. Thus, when the fan is positioned above the fan inlet 175, the pins can drop down allowing the fans to drop down and seat on the fan inlet ring 220 to avoid leaving a gap. An adjustment screw 206 is provided allowing control over the final height of the pins and hence the final position of the plate and fan assembly. Fastenings 214 at the sides of the plate are then used to fix the plate to the side rails, to secure the fan assembly in position. The dropped ends 203b of the channel may also have a small forward angle to help prevent the pins riding up the channel again, e.g. due to vibration, although the clamping force of the fastenings 214 may be sufficient to prevent this.

This arrangement advantageously allows the fans to be removed solely from the rear of the TRU, e.g. from within the trailer from the aperture in the end wall. The fastenings 214 are undone, allowing the fan and plate assembly to be slid out from within the TRU in a rearward direction. Replacement fans may then be mounted to the side rails if required. To reinsert the fans, they are slid into place, guided by the pins in channels arrangement, and the fastener done up. This makes maintenance and/or replacement of the fans much simpler compared with the prior art, where it is typically necessary to position the fans in the TRU from the inside and do/undo bolts holding the fans to the ceiling of the TRU from the outside, i.e. this would most likely require two persons. The present arrangement also makes fine adjustment of the height of the fan possible, allowing a good fit with the fan hole inlet ring, and thus guarding against possible loss of pressure from a poor fit.

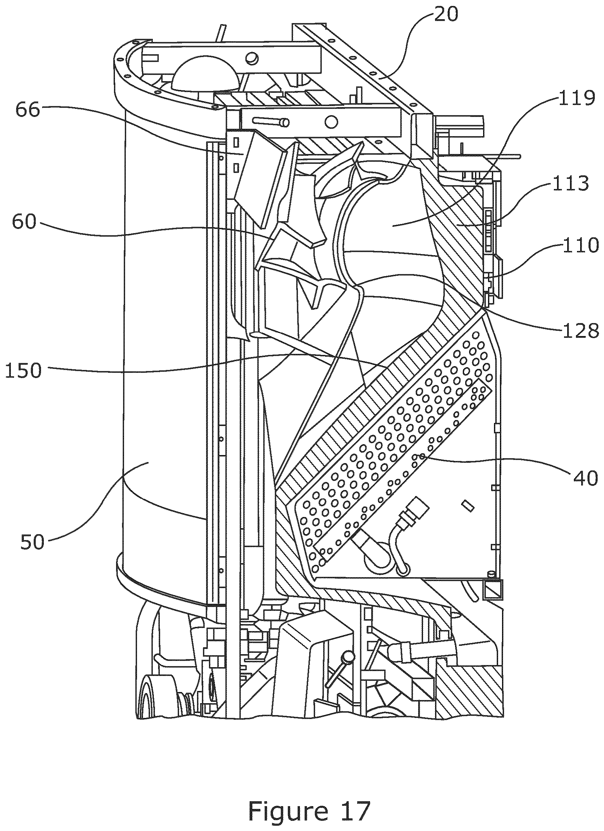

The cross sections of Figures 9 and 16 to 18 show more detail of the plenums formed by the shroud and their respective surfaces. Figures 9 and 16 show vertical cross sections taken in a front to rear plane through approximately the centre of the TRU, Figure 17 shows a vertical cross section taken in a front to rear plane through a condenser fan showing the bowl shaped 119 plenum behind the fan 60, and Figure 18 shows a horizontal cross section through both evaporator fans 55 and condenser fans 60 showing the plenum for the condenser 50.

This arrangement makes efficient user of the available space in the TRU by in effect placing the evaporator and condenser in the same vertical extent when viewed end on, i.e. with the evaporator behind the condenser (but separated by the shroud) and being entirely or preferably at least 75% within its footprint, such that more space is available below the evaporator and condenser for other components, such as battery chemistry. The space occupied by the condenser/evaporator in the TRU volume may be reduced by 40% by this method. This is in contrast with the prior art, where typically the evaporator is below the condenser. At the rear of the shroud, the evaporator fans are also positioned substantively behind the condenser in a central position above the evaporator. At the front, the condenser fans are generally vertically overlapping with the evaporator fans, but outboard the evaporator fans, i.e. positioned to make use of the space outboard the evaporator fans. The condenser fans are also outboard the condenser, i.e. at the sides of the TRU, making access for maintenance much more straightforward than in the prior art, e.g. without even needing to unmount the TRU or condenser. By moving the condenser fans from behind the condenser, this reduces the depth required on the hot side of the shroud, providing additional space for moving the evaporator up to be directly behind the condenser. This is enabled by effectively reversing the direction of the fan mounting compared with the prior art, i.e. so that air is sucked forwards by the fans and the shape of the plenum in reversing the direction of the air entering the condenser in a backwards direction. Hence an efficient use of the limited space is made with the condenser, condenser fan and plenum effectively overlaying the evaporator, evaporator fan and plenum separated by the shroud, with the shroud surfaces forming the respective plenums to achieve a uniform airflow at the surface of the condenser/evaporator, which increases efficiency of heat transfer.

Embodiments of the present invention have been described with particular reference to the examples illustrated. However, it will be appreciated that variations and modifications may be made to the examples described within the scope of the present claims.

### PARENT CLAUSES

The following numbered clauses on pages 20 to 22 of the description correspond to the claims of European patent application no. EP24723774.6 as filed, from which the present application is divided. The claims of the present application as filed can be found on page 23 of the specification under the heading "CLAIMS".
1. A transport refrigeration unit (TRU) for mounting to a mobile enclosure comprising:
   a refrigeration system including a compressor, evaporator and condenser;
   at least one condenser air movement device; and
   a plenum providing an air flow channel between the condenser and condenser air movement device, wherein the direction of air flow is at least partially reversed in the plenum.
2. The unit of clause 1, wherein the condenser and at least one condenser air movement device are both positioned at a front surface of the TRU.
3. The unit of clause 1 or clause 2, wherein air enters the plenum through the condenser in a first direction and the air movement device is positioned at the other end of the plenum and orientated to pull air out of the plenum in a second direction which is at least partially opposite to the first direction.
4. The unit of any of clauses 1 to 3, comprising a shroud having a first surface that at least partially forms the plenum.
5. The unit of clause 4, wherein the evaporator is at least partially behind the condenser and separated from the condenser by the shroud.
6. The unit of clause 4 or 5, wherein the at least one condenser air movement device is positioned outboard of the condenser and the first surface of the shroud is arranged to direct airflow laterally between the condenser and condenser air movement device.
7. The unit of any of clauses 4 to 6, wherein the first surface includes a concave surface portion behind the condenser air movement device such that airflow following the surface undergoes the at least partially reverse in direction.
8. The unit of any preceding clause, wherein air enters the condenser in a rearward direction relative to the normal direction of travel of the mobile enclosure and the condenser air movement device sucks air from the plenum in a direction that is at least partially forwards.
9. The unit of any preceding clauses, wherein the at least one condenser air movement device is accessible at the side of the TRU without having to remove the condenser.
10. The unit of any preceding clause when dependent on clause 4, comprising at least one air movement device positioned above the evaporator for moving air through the evaporator wherein a second surface of the shroud on the opposite side to the first surface at least partially provides a plenum for providing air flow laterally between the evaporator and evaporator air movement device, wherein the condenser air flow plenum is separate from the evaporator air flow plenum.
11. The unit of clause 10, wherein the at least one evaporator air movement device is inboard of the condenser air movement device.
12. The unit of clause 10 or 11, comprising insulation between first and second surfaces of the shroud.
13. The unit of any of clauses 10 to 12, wherein the overlying first and second surfaces of the shroud are differently curved in the region forming the condenser and evaporator plenums.
14. The unit of any preceding clause, wherein a cowl is fixed to the first surface of the shroud such that at least part of the condenser plenum is formed between the cowl and first surface of the shroud.
15. The unit of clause 14, wherein the condenser air movement device is mounted above a hole in the cowl.
16. The unit of clause 14 or 15, wherein the cowl at least partially defines an aperture above which the condenser is mounted.
17. The unit of any preceding clause, wherein the condenser air movement device is a centrifugal fan arranged to push out air in a radial direction, the unit comprising one or more members that mount around the fan having surfaces that form a scroll that is arranged to direct airflow pushed out of the fan in a particular direction where it exits through an aperture in the TRU.
18. The unit of clause 17, wherein the fan is mounted to the one or more members.
19. The unit of clause 16 or 17, wherein the one or more members provides a drip tray to drain away rain water that enters the TRU.
20. The unit of any preceding clause when dependent on clause 4, wherein the shroud comprises one or more drip trays positioned below at least one of the condenser and evaporator.
21. The unit of clause 20, wherein the evaporator drip tray has a heating element running along its length which when provided with electrical current by a control system prevents water in the drip tray from freezing, wherein the element is encapsulated in the drip tray by a sealant, such as an epoxy material.
22. A transport refrigeration unit (TRU) for mounting to a mobile enclosure comprising:
   a chassis;
   at least one air movement device; and
   a mounting assembly for the air movement device comprising:
      sliding pins fixed to the air movement device and extended at the sides;
      first and second rails mounted to or formed by the chassis,
      wherein the rails have respective channels for receiving the respective sliding pins, wherein when mounting the air movement device the channels receive the pins at a proximal end and guide the fan assembly in a first direction towards a received position in the chassis as the pins slide along the channels.
23. The unit of clause 22, comprising:
   a plenum having an opening for communicating with the air movement device,
   wherein the distal ends of the channels extend in a second direction at least partially perpendicular to the first direction and towards the opening such that the movement of the pins in the distal end of the channels causes the air movement device to seat against the opening.
24. The unit of clause 22 or 23, comprising an adjustment screw for adjusting the depth of the pins in the distal end of the channels.
25. The unit of any of clauses 22 to 24, comprising one or more reversible fixtures for securing the air movement device in the received position.
26. A method of transporting goods comprising controlling the temperature of the goods in the mobile enclosure with the TRU of any preceding clauses whist transporting the goods to a destination.

## Claims

1. A transport refrigeration unit (TRU) for mounting to a mobile enclosure comprising:
a chassis;
at least one air movement device; and
a mounting assembly for the air movement device comprising:
sliding pins fixed to the air movement device and extended at the sides;
first and second rails mounted to or formed by the chassis,
wherein the rails have respective channels for receiving the respective sliding pins, wherein when mounting the air movement device the channels receive the pins at a proximal end and guide the fan assembly in a first direction towards a received position in the chassis as the pins slide along the channels.

2. The unit of claim 1, comprising:
a plenum having an opening for communicating with the air movement device, wherein the distal ends of the channels extend in a second direction at least partially perpendicular to the first direction and towards the opening such that the movement of the pins in the distal end of the channels causes the air movement device to seat against the opening.

3. The unit of claim 1 or 2, comprising an adjustment screw for adjusting the depth of the pins in the distal end of the channels.

4. The unit of any of claims 1 to 3, comprising one or more reversible fixtures for securing the air movement device in the received position.

5. A method of transporting goods comprising controlling the temperature of the goods in the mobile enclosure with the TRU of any preceding claims whist transporting the goods to a destination.
